# EUROPEAN PATENT APPLICATION

(11) **EP 4 815 052 A1**
(43) Date of publication of application: **30.09.2026**
(21) Application number: 24895528.8
(22) Date of filing: 05.06.2024
(51) Int. Cl.: H01M 4/36, H01M 4/505, H01M 4/13, H01M 10/0525, C08G 77/44

(54) **POSITIVE ELECTRODE ACTIVE MATERIAL AND PREPARATION METHOD THEREFOR, POSITIVE ELECTRODE SHEET, BATTERY, AND ELECTRICAL APPARATUS**

(30) Priority: 30.11.2023 CN 202311644278
(71) Applicant: Contemporary Amperex Technology Co., Limited, Ningde, Fujian 352100 (CN)
(72) Inventor: MA, Yating, Ningde, Fujian 352100 (CN); ZHANG, Xiaoli, Ningde, Fujian 352100 (CN); CAO, Junqi, Ningde, Fujian 352100 (CN)
(74) Representative: Ziebig Hengelhaupt Intellectual Property Attorneys Patentanwaltskanzlei PartGmbB
(86) International application number: PCT/CN2024/097594
(87) International publication number: WO 2025/112422

(57) **Abstract**

A positive electrode active material and a preparation method therefor, a positive electrode sheet, a battery, and an electrical apparatus. The positive electrode active material comprises an inner core and a coating layer; the inner core comprises a transition metal oxide; the coating layer is formed on the surface of the inner core; the coating layer comprises a polymer containing a silicon-oxygen bond; on the basis of the total mass of the positive electrode active material, the mass percentage of silicon in the polymer is 0.05%-1%.

## Description

### CROSS-REFERENCE TO RELATED APPLICATION

The present application claims priority to Chinese Patent Application No. 202311644278.8 entitled "POSITIVE ELECTRODE ACTIVE MATERIAL AND PREPARATION METHOD THEREFOR, POSITIVE ELECTRODE SHEET, BATTERY, AND ELECTRICAL APPARATUS" and filed with China National Intellectual Property Administration on November 30, 2023, which is incorporated herein by reference in its entirety.

### TECHNICAL FIELD

The present application relates to the field of batteries, and in particular, to a positive electrode active material and a preparation method therefor, a positive electrode plate and a preparation method therefor, a battery, and an electric device.

### BACKGROUND

In recent years, with the increasingly widespread application of batteries, they have been extensively used in energy storage power systems such as hydropower, thermal power, wind power, and solar power stations, as well as in various fields such as electric tools, electric bicycles, electric motorcycles, electric vehicles, military equipment, and aerospace. With the increasing demand of people for higher energy density of batteries, increasing the operating voltage of the positive electrode material is an effective means. However, existing batteries have relatively high direct current resistance and poor cycle performance at high voltages.

### SUMMARY

In view of the technical problems in the background, the present application provides a positive electrode active material to improve the direct current resistance and cycle performance of a battery containing the positive electrode active material at a high voltage.

In order to achieve the above objective, a first aspect of the present application provides a positive electrode active material. The positive electrode active material includes:
a core, including a transition metal oxide; and
a coating layer formed on the surface of the core, where the coating layer includes a polymer containing a silicon-oxygen bond, and on the basis of the total mass of the positive electrode active material, the mass proportion of silicon in the polymer is 0.05% to 1%.

The present application at least includes the following beneficial effects: The positive electrode active material of the present application has relatively high stability and thus improved battery cycle performance and direct current resistance at a high voltage.

In some embodiments, on the basis of the total mass of the positive electrode active material, the mass proportion of silicon in the polymer is 0.1% to 0.3%. Therefore, the cycle performance and direct current resistance of the battery at a high voltage can be improved.

In some embodiments, the thickness of the coating layer is 1 nm to 5 nm. Therefore, the cycle performance and direct current resistance of the battery at a high voltage can be improved.

In some embodiments, the thickness of the coating layer is 2 nm to 3 nm. Therefore, the cycle performance and direct current resistance of the battery at a high voltage can be improved.

In some embodiments, the transition metal oxide includes at least one of LiₓMO_{y} and NaₓMO_{y}, where x is 1 to 2, y is 2 to 3, and M includes at least one of Ni, Co, Mn, Fe, Al, W, Nb, Ti, Sr, Zr, or V.

In some embodiments, the polymer contains at least one of a boron-containing group, a phosphorus-containing group, a halogen-containing group, a selenium-containing group, cyano, hydroxyl, -N₃, nitroso, amino, an ester group, acylamino, an aldehyde group, acyl, alkyl, alkoxy, alkylthio, or alkylamine. Therefore, the cycle performance and direct current resistance of the battery at a high voltage can be improved.

In some embodiments, the polymer contains at least one of a boron-containing group, cyano, -N₃, amino, acylamino, or alkylthio. Therefore, the cycle performance and direct current resistance of the battery at a high voltage can be improved.

In a second aspect of the present application, the present application provides a method for preparing a positive electrode active material. The method includes: mixing a transition metal oxide with a siloxane-containing backbone material and a siloxane-containing crosslink material to form a coating layer including a polymer containing a silicon-oxygen bond on the surface of the transition metal oxide, where the siloxane-containing backbone material includes at least 2 silicon atoms and at least 3 siloxane groups,
the siloxane-containing crosslink material includes 1 to 3 siloxane groups, and
on the basis of the total mass of the positive electrode active material, the mass proportion of silicon in the polymer is 0.05% to 1%.

Therefore, a positive electrode active material with relatively high stability can be prepared with the method above, such that the cycle performance and direct current resistance of the battery at a high voltage can be improved.

In some embodiments, the molecular weight of the siloxane-containing backbone material is 300 to 10,000. Therefore, a dense and stable coating layer can be formed on the surface of the transition metal oxide, and the cycle performance and direct current resistance of the battery at a high voltage can be improved.

In some embodiments, the molecular weight of the siloxane-containing backbone material is 500 to 1200. Therefore, a dense and stable coating layer can be formed on the surface of the transition metal oxide, and the cycle performance and direct current resistance of the battery at a high voltage can be improved.

In some embodiments, the structural formula of the siloxane-containing backbone material includes: 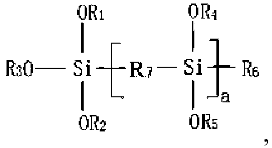 where a is 1 to 6, R₁, R₂, R₃, R₄, and R₅ each independently include alkyl, R₆ includes alkyl, alkoxy, a boron-containing group, a phosphorus-containing group, a halogen-containing group, a selenium-containing group, cyano, hydroxyl, -N₃, nitroso, amino, an ester group, acylamino, an aldehyde group, acyl, alkylthio, or alkylamine, and R₇ includes alkyl, alkenyl, alkoxy, phenyl, 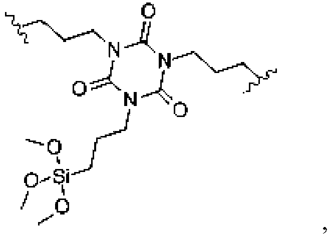 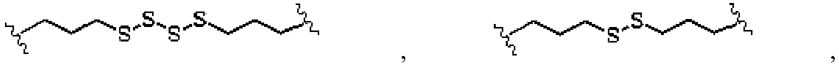 or 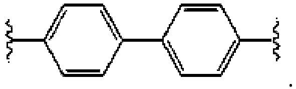 Therefore, a dense and stable coating layer can be formed on the surface of the transition metal oxide, and the cycle performance and direct current resistance of the battery at a high voltage can be improved.

In some embodiments, R₁, R₂, R₃, R₄, and R₅ each independently include ethyl or methyl, R₆ includes methoxy or ethoxy, and R₇ includes 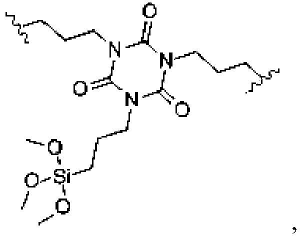 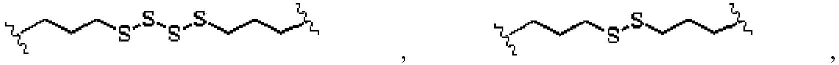 or 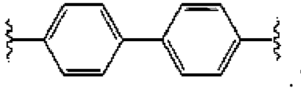 Therefore, a dense and stable coating layer can be formed on the surface of the transition metal oxide, and the cycle performance and direct current resistance of the battery at a high voltage can be improved.

In some embodiments, the siloxane-containing backbone material includes at least one of 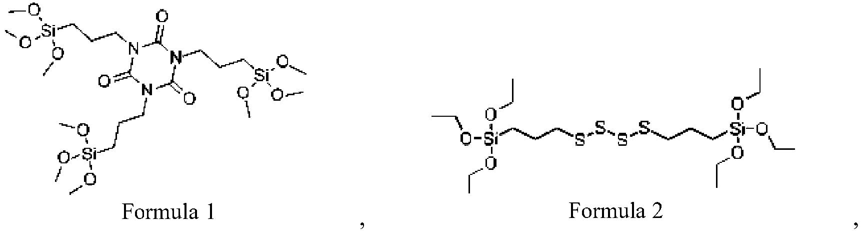 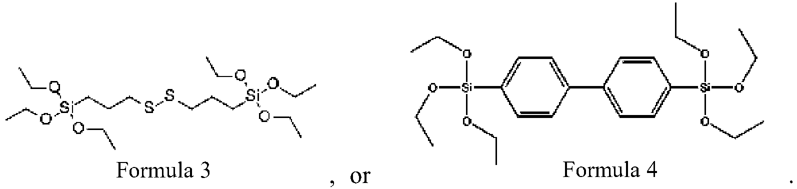 Therefore, a dense and stable coating layer can be formed on the surface of the transition metal oxide, and the cycle performance and direct current resistance of the battery at a high voltage can be improved.

In some embodiments, the siloxane-containing backbone material includes at least one of 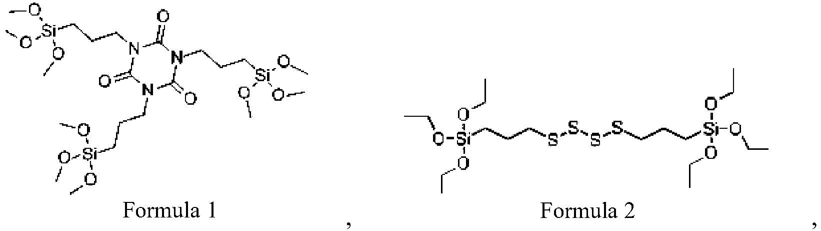 or 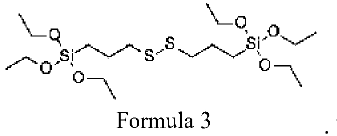 Therefore, a dense and stable coating layer can be formed on the surface of the transition metal oxide, and the cycle performance and direct current resistance of the battery at a high voltage can be improved.

In some embodiments, the molecular weight of the siloxane-containing crosslink material is 90 to 500. Therefore, a dense and stable coating layer can be formed on the surface of the transition metal oxide, and the cycle performance and direct current resistance of the battery at a high voltage can be improved.

In some embodiments, the molecular weight of the siloxane-containing crosslink material is 100 to 300. Therefore, a dense and stable coating layer can be formed on the surface of the transition metal oxide, and the cycle performance and direct current resistance of the battery at a high voltage can be improved.

In some embodiments, the structural formula of the siloxane-containing crosslink material includes: 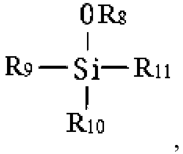 where R₈ includes alkyl, R₉ and R₁₀ each independently include hydrogen, alkyl, alkoxy, phenyl, or haloalkyl, and R₁₁ includes alkyl, 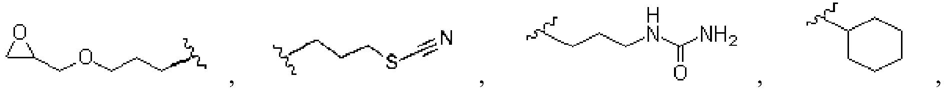 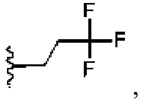 a boron-containing group, a phosphorus-containing group, a halogen-containing group, a selenium-containing group, cyano, hydroxyl, -N₃, nitroso, amino, an ester group, acylamino, an aldehyde group, acyl, alkylthio, or alkylamine. Therefore, a dense and stable coating layer can be formed on the surface of the transition metal oxide, and the cycle performance and direct current resistance of the battery at a high voltage can be improved.

In some embodiments, R₈ and R₉ each independently include methyl, ethyl, methoxy, or ethoxy, R₁₀ includes methyl, methoxy, or ethoxy, and R₁₁ includes methyl, 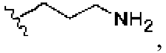 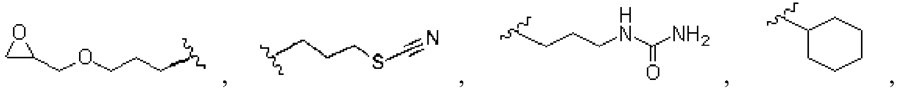 or 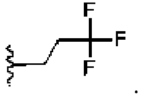 Therefore, a dense and stable coating layer can be formed on the surface of the transition metal oxide, and the cycle performance and direct current resistance of the battery at a high voltage can be improved.

In some embodiments, the siloxane-containing crosslink material includes at least one of 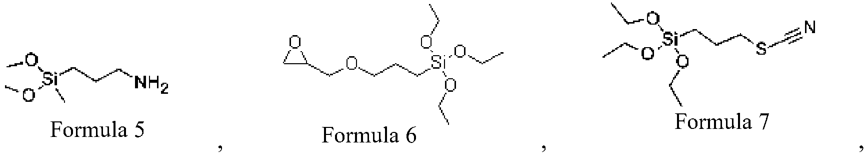 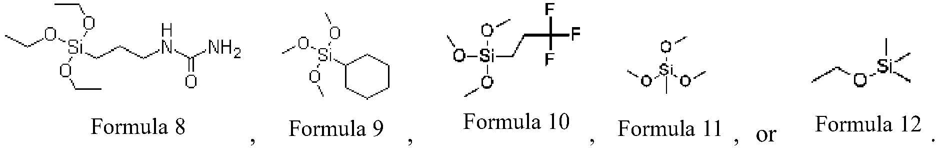 Therefore, a dense and stable coating layer can be formed on the surface of the transition metal oxide, and the cycle performance and direct current resistance of the battery at a high voltage can be improved.

In some embodiments, the siloxane-containing crosslink material includes at least one of 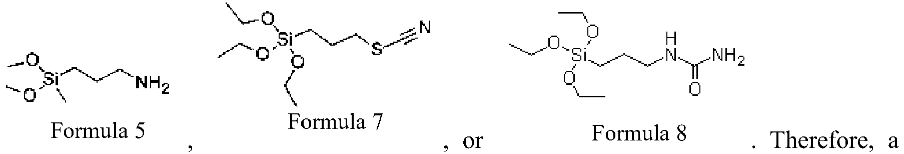 dense and stable coating layer can be formed on the surface of the transition metal oxide, and the cycle performance and direct current resistance of the battery at a high voltage can be improved.

In some embodiments, the mass ratio of the total mass of the siloxane-containing backbone material and the siloxane-containing crosslink material to the transition metal oxide is 1:50 to 1: 1000. Therefore, a dense and stable coating layer can be formed on the surface of the transition metal oxide, and the cycle performance and direct current resistance of the battery at a high voltage can be improved.

In some embodiments, the mass ratio of the total mass of the siloxane-containing backbone material and the siloxane-containing crosslink material to the transition metal oxide is 1:100 to 1:200. Therefore, a dense and stable coating layer can be formed on the surface of the transition metal oxide, and the cycle performance and direct current resistance of the battery at a high voltage can be improved.

In some embodiments, the mass ratio of the siloxane-containing backbone material to the siloxane-containing crosslink material is 1:1 to 50:1. Therefore, a dense and stable coating layer can be formed on the surface of the transition metal oxide, and the cycle performance and direct current resistance of the battery at a high voltage can be improved.

In some embodiments, the mass ratio of the siloxane-containing backbone material to the siloxane-containing crosslink material is 10:1 to 30:1. Therefore, a dense and stable coating layer can be formed on the surface of the transition metal oxide, and the cycle performance and direct current resistance of the battery at a high voltage can be improved.

In a third aspect of the present application, the present application provides a positive electrode plate. The positive electrode plate includes the positive electrode active material according to the first aspect of the present application or a positive electrode active material obtained from the method according to the second aspect of the present application.

In a fourth aspect of the present application, the present application provides a battery. The battery includes the positive electrode plate according to the third aspect of the present application. Therefore, the battery has better cycle performance and relatively low direct current resistance at a high voltage.

In a fifth aspect of the present application, the present application provides an electric device. The electric device includes the battery according to the fourth aspect of the present application. Therefore, the electric device has an excellent service life.

The additional aspects and the advantages of the present application will be partially provided in the following description, will partially become apparent from the following description, or will be learned through the practice of the present application.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the present application. Furthermore, the same reference numerals in all the drawings denote identical components. In the drawings:
FIG. 1 is a cross section view of a positive electrode active material according to one embodiment of the present application.
FIG. 2 is a schematic view of a battery according to one embodiment of the present application.
FIG. 3 is an exploded view of the battery according to one embodiment of the present application shown in FIG. 2.
FIG. 4 is a schematic view of a battery module according to one embodiment of the present application.
FIG. 5 is a schematic view of a battery pack according to one embodiment of the present application.
FIG. 6 is an exploded view of the battery pack according to one embodiment of the present application shown in FIG. 5.
FIG. 7 is a schematic view of an electric device using a battery as the power source according to one embodiment of the present application.
FIG. 8 is a TEM image of the positive electrode active material obtained in Example 1.
FIG. 9 is a TEM image of the positive electrode active material obtained in Comparative Example 1.
FIG. 10 is a comparison diagram of cycle curves of the batteries obtained in Example 1 and Comparative Example 1.
FIG. 11 is a comparison diagram of DCRs of the batteries obtained in Example 1 and Comparative Example 1 after cycling.

Description of the reference numerals:
1000, positive electrode active material; 100, core; 200, coating layer; 1, battery cell; 11, housing; 12, electrode assembly; 13, cover plate; 2, battery module; 3, battery pack; 31, upper case body; 32, lower case body.

### DETAILED DESCRIPTION

The examples of the technical solutions of the present application are described in detail below. The following examples are only used to more clearly illustrate the technical solutions of the present application, and therefore, are only exemplary and do not limit the protection scope of the present application.

Reference in the present application to "example" means that a particular feature, structure, or characteristic described in combination with the example may be included in at least one example of the present application. The references of the word in the context of the specification do not necessarily refer to the same example, nor to separate or alternative examples exclusive of other examples. It will be explicitly and implicitly appreciated by those skilled in the art that the examples described herein may be combined with other examples.

The "ranges" disclosed in the present application are defined by lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it will be appreciated that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present application, unless otherwise specified, the numerical range "a to b" represents an abbreviated representation of any combination of real numbers between a and b, where both a and b are real numbers. For example, the numerical range "0 to 5" indicates that all real numbers between 0 and 5 are listed herein, and "0 to 5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

At present, judging from the trends in the market, the application of secondary batteries is becoming increasingly widespread. Secondary batteries are not only applied in energy storage power systems such as hydropower, thermal power, wind power, and solar power stations, but are also widely applied to electric transportation vehicles such as electric bicycles, electric motorcycles, electric cars, as well as in military equipment, aerospace, and other fields. As the application of secondary batteries becomes broader, the market demand thereof is also increasing.

In order to further improve the energy density of batteries, the operating voltage of the positive electrode material may be increased. The utilization rate of active ions in the positive electrode material may be improved by increasing the operating voltage, thereby improving the energy density of batteries. However, the increase of the operating voltage accelerates the side reactions on the surface of the positive electrode material and the lattice oxygen deintercalation, such that the surface of the positive electrode is transformed from a layered structure into a rock salt phase structure with sharply deteriorated kinetics performance, and the reaction kinetics of the deintercalation of active ions is reduced, thereby seriously deteriorating the cycle life and DCR (direct current impedance) of the battery.

The positive electrode active material in the present application includes a core and a coating layer, the core includes a transition metal oxide, the coating layer includes a polymer containing a silicon-oxygen bond (-Si-O-Si-), and on the basis of the total mass of the positive electrode active material, the mass proportion of silicon in the polymer is 0.05% to 1%, that is, the coating layer has relatively high stability and compactness, which can effectively alleviate the corrosion of HF in the electrolytic solution on the surface of the transition metal oxide and reduce the side reactions of the transition metal and the lattice oxygen deintercalation, thereby stabilizing the surface of the transition metal oxide, improving the stability of the positive electrode active material, and achieving the purpose of improving the cycle performance and DCR of the battery at a high voltage.

The positive electrode active material disclosed in the embodiments of the present application is applicable to a lithium-ion battery and a sodium-ion battery, and the battery disclosed in the embodiments of the present application may be used in an electric device using a battery as a power source or various energy storage systems using a battery as an energy storage element. The electric device may include, but is not limited to, a mobile phone, a tablet, a laptop computer, an electric toy, an electric tool, an electric bicycle, an electric car, a ship, a spacecraft, and the like. The electric toy may include stationary or mobile electric toys, such as game consoles, electric car toys, electric ship toys, or electric airplane toys. The spacecraft may include airplanes, rockets, space shuttles, spaceships, and the like.

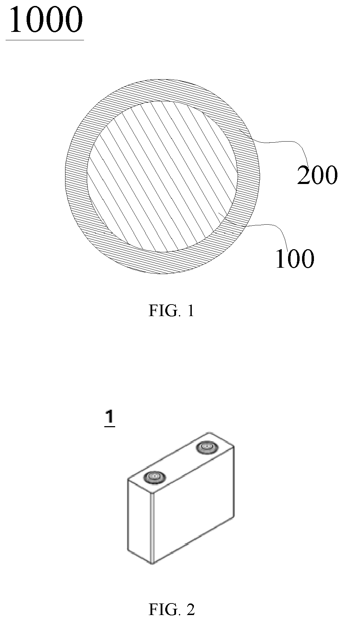

A first aspect of the present application provides a positive electrode active material. Referring to FIG. 1, the positive electrode active material 1000 includes a core 100 and a coating layer 200. The core 100 includes a transition metal oxide, and the coating layer 200 is formed on the surface of the core 100. The coating layer 200 includes a polymer containing a silicon-oxygen bond, and on the basis of the total mass of the positive electrode active material, the mass proportion of silicon in the polymer is 0.05% to 1%.

The positive electrode active material in the present application includes a core 100 including a transition metal oxide and a coating layer 200 formed on at least part of the surface of the core 100, the coating layer 200 includes a polymer containing a silicon-oxygen bond, and on the basis of the total mass of the positive electrode active material, the mass proportion of silicon in the polymer is 0.05% to 1%, that is, the coating layer 200 of the present application contains a high content of silicon, which can improve the compactness and stability of the coating layer 200, effectively alleviate the corrosion of HF in the electrolytic solution on the surface of the transition metal oxide, and reduce the side reactions of the transition metal and the lattice oxygen deintercalation, thereby stabilizing the surface of the transition metal oxide, improving the stability of the positive electrode active material, and achieving the purpose of improving the cycle performance and DCR of the battery at a high voltage.

The transition metal oxide may include various additional metal ions other than active ions such as lithium ions and sodium ions. In some embodiments of the present application, the transition metal oxide includes at least one of LiₓMO_{y} and NaₓMO_{y}, where x is 1 to 2, y is 2 to 3, and M includes at least one of Ni, Co, Mn, Fe, Al, W, Nb, Ti, Zr, Sr, or V. As an example, when the battery is a lithium-ion battery, the transition metal oxide may include, but is not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁), LiNi_{0.56}Co_{0.05}Mn_{0.39}O₂), a lithium nickel cobalt aluminum oxide (such as LiNi_{0.8}Co_{0.15}Al_{0.05}O₂), or a modified compound thereof. When the battery is a sodium-ion battery, the transition metal oxide may include, but are not limited to, at least one of a sodium cobalt oxide (e.g., NaCoO₂), a sodium nickel oxide (e.g., NaNiO₂), a sodium manganese oxide (e.g., NaMnO₂, NaMn₂O₄), a sodium nickel cobalt oxide, a sodium manganese cobalt oxide, a sodium nickel manganese oxide, a sodium nickel cobalt manganese oxide (e.g., NaNi_{1/3}Co_{1/3}Mn_{1/3}O₂, NaNi_{0.5}Co_{0.2}Mn_{0.3}O₂, NaNi_{0.5}Co_{0.25}Mn_{0.25}O₂, NaNi_{0.6}Co_{0.2}Mn_{0.2}O₂, NaNi_{0.8}Co_{0.1}Mn_{0.1}O₂, NaNi_{0.56}Co_{0.05}Mn_{0.39}O₂, a sodium nickel cobalt aluminum oxide (e.g., NaNi_{0.8}Co_{0.15}Al_{0.05}O₂), or a modified compound thereof.

The transition metal oxides described above all include a layered structure, such that the direct contact of their surface with the electrolytic solution may deteriorate the stability of the transition metal oxide. According to the present application, the coating layer 200 of the polymer containing a silicon-oxygen bond is formed on the surface of the core 100, and on the basis of the total mass of the positive electrode active material, the mass proportion of silicon in the polymer is 0.05% to 1%, that is, the coating layer 200 of the present application contains a high content of silicon, which can improve the compactness and stability of the coating layer 200, effectively alleviate the corrosion of HF in the electrolytic solution on the surface of the transition metal oxide, and reduce the side reactions of the transition metal and the lattice oxygen deintercalation, thereby stabilizing the surface of the transition metal oxide, improving the stability of the positive electrode active material, and achieving the purpose of improving the cycle performance and DCR of the battery at a high voltage.

It should be noted that the content of silicon in the polymer in the present application may be quantitatively analyzed by using an inductively coupled plasma optical emission spectrometer (ICP).

In some embodiments of the present application, on the basis of the total mass of the positive electrode active material, the mass proportion of silicon in the polymer is 0.05% to 1%, for example, 0.05% to 0.95%, 0.1% to 0.9%, 0.15% to 0.85%, 0.2% to 0.8%, 0.25% to 0.75%, 0.3% to 0.7%, 0.35% to 0.65%, 0.4% to 0.6%, 0.45% to 0.55%, 0.5% to 0.55%, or the like. Therefore, the coating layer 200 formed on the surface of the core 100 has a dense structure and high stability, which can effectively alleviate the corrosion of HF in the electrolytic solution on the surface of the transition metal oxide and reduce the side reactions of the transition metal and the lattice oxygen deintercalation, thereby stabilizing the surface of the transition metal oxide and achieving the purpose of improving the cycle performance and DCR of the battery at a high voltage. In some embodiments of the present application, on the basis of the total mass of the positive electrode active material, the mass proportion of silicon in the polymer is 0.1% to 0.3%.

In some embodiments of the present application, the thickness of the coating layer 200 may be 1 nm to 5 nm, for example, 2 nm, 3 nm, 4 nm, 5 nm, or the like. Therefore, the coating layer 200 with this thickness is formed on the surface of the core 100, which effectively alleviates the corrosion of HF in the electrolytic solution on the surface of the transition metal oxide and reduces the side reactions of the transition metal and the lattice oxygen deintercalation, thereby stabilizing the surface of the transition metal oxide and achieving the purpose of improving the cycle performance and DCR of the battery at a high voltage. In some other embodiments of the present application, the thickness of the coating layer may be 2 nm to 3 nm.

It should be noted that the method for testing the thickness of the coating layer 200 may be observation by using a transmission electron microscope (TEM).

In some embodiments of the present application, the polymer contains at least one of a boron-containing group, a phosphorus-containing group, a halogen-containing group, a selenium-containing group, cyano, hydroxyl, -N₃, nitroso, amino, an ester group, acylamino, an aldehyde group, acyl, alkyl, alkoxy, alkylthio, or alkylamine. Therefore, such groups in the present application can further improve the compactness and/or oxidation resistance of the coating layer 200, effectively alleviate the corrosion of HF in the electrolytic solution on the surface of the transition metal oxide, and reduce the side reactions of the transition metal and the lattice oxygen deintercalation, thereby stabilizing the surface of the transition metal oxide and achieving the purpose of improving the cycle performance and DCR of the battery at a high voltage. In some other embodiments of the present application, the polymer contains at least one of a boron-containing group, cyano, -N₃, amino, acylamino, or alkylthio.

It should be noted that the "boron-containing group" refers to a group containing boron element, for example, B³⁺, BO₃³⁻, BO₂⁻, or the like; the "phosphorus-containing group" refers to a group containing phosphorus element, for example, P³⁻, P²⁻, P⁻, PO₄³⁻, PO₃⁻, or the like; the "halogen-containing group" refers to a group containing a halogen element, for example, F⁻, Cl⁻, Br-, CH₂F-, CH₂Cl-, or the like; the "selenium-containing group" refers to a group containing selenium element, for example, Se²⁻.

In a second aspect of the present application, the present application provides a method for preparing a positive electrode active material. The method includes: mixing a transition metal oxide with a siloxane-containing backbone material and a siloxane-containing crosslink material to form a coating layer including a polymer containing a silicon-oxygen bond on the surface of the transition metal oxide. The siloxane-containing backbone material includes at least 2 silicon atoms and at least 3 siloxane groups, the siloxane-containing crosslink material includes 1 to 3 siloxane groups, and on the basis of the total mass of the positive electrode active material, the mass proportion of silicon in the polymer is 0.05% to 1%.

Therefore, by mixing the transition metal oxide with the siloxane-containing backbone material and the siloxane-containing crosslink material, the alkoxy group in the backbone material and the alkoxy group in the crosslink material are hydrolyzed under the action of ambient water, and the materials are thoroughly cross-linked, such that a complete coating layer containing a silicon-oxygen bond and having a high silicon content can be formed on the surface of the transition metal oxide. In addition, by controlling the mass proportion of silicon in the polymer at 0.05% to 1%, the coating layer has a dense structure and high stability, which can effectively alleviate the corrosion of HF in the electrolytic solution on the surface of the transition metal oxide and reduce the side reactions of the transition metal and the lattice oxygen deintercalation, thereby stabilizing the surface of the transition metal oxide and achieving the purpose of improving the cycle performance and DCR of the battery at a high voltage.

It should be noted that the "siloxane" refers to a group of -SiO-R, where R is alkyl.

In some embodiments of the present application, the molecular weight of the siloxane-containing backbone material is 300 to 10,000, for example, 500 to 10,000, 800 to 10,000, 1000 to 10,000, 1500 to 10,000, 2000 to 9000, 3000 to 8000, 4000 to 7000, 5000 to 6000, 5000 to 5500, or the like. In some embodiments of the present application, the molecular weight of the siloxane-containing backbone material is 500 to 1200.

In some embodiments of the present application, the structural formula of the siloxane-containing backbone material includes: 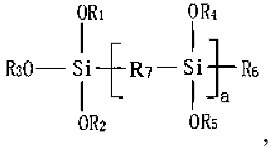 where a is 1 to 6, R₁, R₂, R₃, R₄, and R₅ each independently include alkyl, R₆ includes alkyl, alkoxy, a boron-containing group, a phosphorus-containing group, a halogen-containing group, a selenium-containing group, cyano, hydroxyl, -N₃, nitroso, amino, an ester group, acylamino, an aldehyde group, acyl, alkylthio, or alkylamine, and R₇ includes alkyl, alkenyl, alkoxy, phenyl, 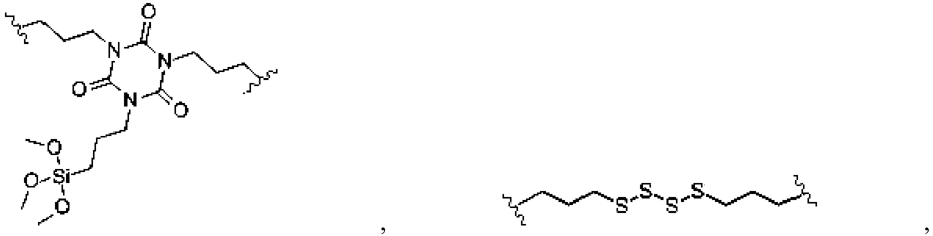 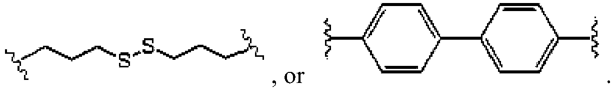 Therefore, mixing the backbone material and the crosslink material of such compositions can form a better coating layer on the surface of the transition metal oxide, and the high silicon content in the coating layer effectively alleviates the corrosion of HF in the electrolytic solution on the surface of the transition metal oxide and reduces the side reactions of the transition metal and the lattice oxygen deintercalation, thereby stabilizing the surface of the transition metal oxide and achieving the purpose of improving the cycle performance and DCR of the battery at a high voltage.

It should be noted that the wavy bond " 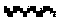 " in the above groups refers to a connection site between the molecular structure and other structures.

In some embodiments of the present application, in the structural formula of the siloxane-containing backbone material, R₁, R₂, R₃, R₄, and R₅ each independently include ethyl or methyl, R₆ includes methoxy or ethoxy, and R₇ includes 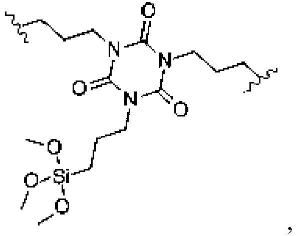 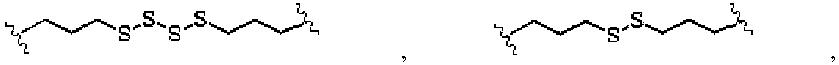 or 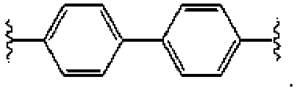 Therefore, hydrolyzing and cross-linking the backbone material and the crosslink material of such compositions can form a better coating layer on the surface of the transition metal oxide, and the high silicon content in the coating layer effectively alleviates the corrosion of HF in the electrolytic solution on the surface of the transition metal oxide and reduces the side reactions of the transition metal and the lattice oxygen deintercalation, thereby stabilizing the surface of the transition metal oxide and achieving the purpose of improving the cycle performance and DCR of the battery at a high voltage.

As an example, the siloxane-containing backbone material includes at least one of 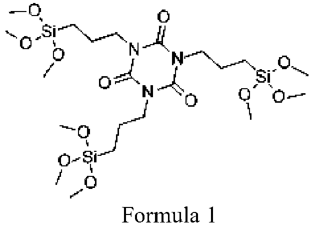 (1,3,5-tris(trimethoxysilylpropyl)isocyanurate (CAS: 26115-70-8)), 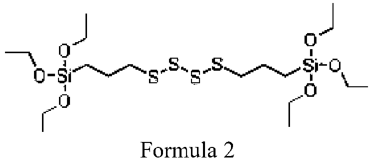 (bis-(3-(triethoxysilane)propyl)-tetrasulfide (CAS: 40372-72-3)), 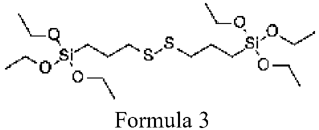 (bis-[3-(triethoxysilyl)propyl]-disulfide (CAS: 56706-10-6)), or 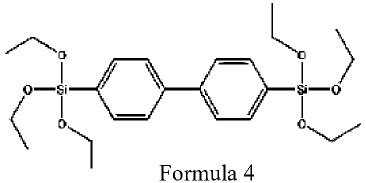 (4,4'-bis(triethoxysilyl)-1,1'-biphenyl (CAS: 123640-93-7)). In some other embodiments of the present application, the siloxane-containing backbone material includes at least one of 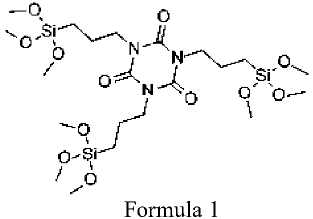 (1,3,5-tris(trimethoxysilylpropyl)isocyanurate (CAS: 26115-70-8)), 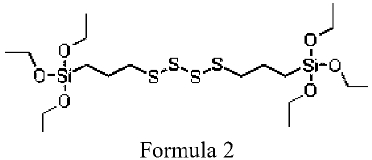 (bis-(3-(triethoxysilane)propyl)-tetrasulfide (CAS: 40372-72-3)), or 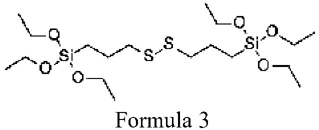 (bis-[3-(triethoxysilyl)propyl]-disulfide (CAS: 56706-10-6)).

In some embodiments of the present application, the molecular weight of the siloxane-containing crosslink material is 90 to 500, for example, 100 to 400, 150 to 350, 200 to 300, 250 to 300, or the like. In some other embodiments of the present application, the molecular weight of the siloxane-containing crosslink material is 100 to 300.

In some embodiments of the present application, the structural formula of the siloxane-containing crosslink material includes: 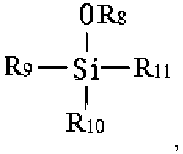 where R₈ includes alkyl, R₉ and R₁₀ each independently include hydrogen, alkyl, alkoxy, phenyl, or haloalkyl, and R₁₁ includes alkyl, 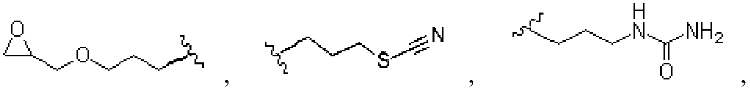 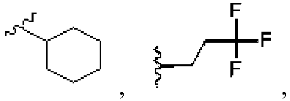 a boron-containing group, a phosphorus-containing group, a halogen-containing group, a selenium-containing group, cyano, hydroxyl, -N₃, nitroso, amino, an ester group, acylamino, an aldehyde group, acyl, alkylthio, or alkylamine. Therefore, mixing the crosslink material and the backbone material of the compositions of the present application can form a better coating layer on the surface of the transition metal oxide, and the high silicon content in the coating layer effectively alleviates the corrosion of HF in the electrolytic solution on the surface of the transition metal oxide and reduces the side reactions of the transition metal and the lattice oxygen deintercalation, thereby stabilizing the surface of the transition metal oxide and achieving the purpose of improving the cycle performance and DCR of the battery at a high voltage.

In some embodiments of the present application, in the structural formula of the siloxane-containing crosslink material, R₈ and R₉ each independently include methyl, ethyl, methoxy, or ethoxy, R₁₀ includes methyl, methoxy, or ethoxy, and R₁₁ includes methyl,

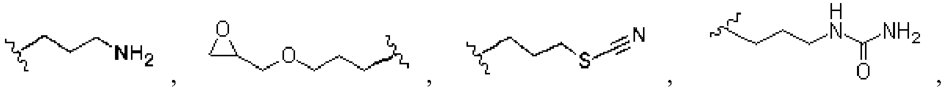

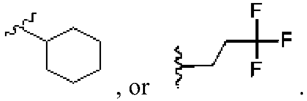

As an example, the siloxane-containing crosslink material includes at least one of 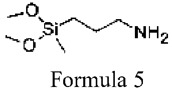 (3-aminopropylmethyldimethoxysilane (CAS: 3663-44-3)), 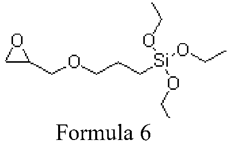 (3-glycidyloxypropyltriethoxysilane (CAS: 2602-34-8)), 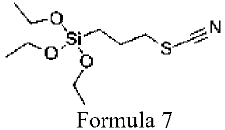 (3-thiocyanopropyltriethoxysilane (CAS: 34708-08-2)), 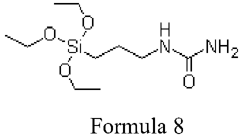 (3-ureidopropyltriethoxysilane (CAS: 23779-32-0)), 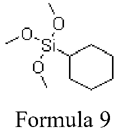 (cyclohexyltrimethoxysilane (CAS: 17865-54-2)), 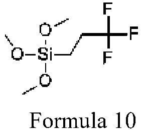 (3,3,3-trifluoropropyltrimethoxysilane (CAS: 429-60-7)), 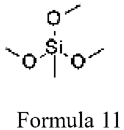 (methyltrimethoxysilane (CAS: 1185-55-3)), or 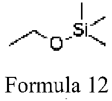 (trimethylethoxysilane (CAS: 1825-62-3)). In some other embodiments of the present application, the siloxane-containing crosslink material includes at least one of 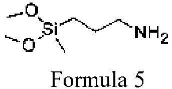 (3-aminopropylmethyldimethoxysilane (CAS: 3663-44-3)), 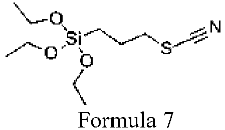 (3-thiocyanopropyltriethoxysilane (CAS: 34708-08-2)), or 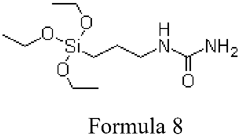 (3-ureidopropyltriethoxysilane (CAS: 23779-32-0)).

In some embodiments of the present application, the mass ratio of the total mass of the siloxane-containing backbone material and the siloxane-containing crosslink material to the transition metal oxide is 1:50 to 1:1000, for example, 1:100 to 1:1000, 1:150 to 1:950, 1:200 to 1:900, 1:250 to 1:850, 1:300 to 1:800, 1:350 to 1:750, 1:400 to 1:700, 1:450 to 1:650, 1:500 to 1:600, 1:550 to 1:600, or the like. Therefore, according to the present application, mixing the materials in the ratio of the total mass of the siloxane-containing backbone material and the siloxane-containing crosslink material to the transition metal oxide can, without reducing the overall energy density of the battery, forms a dense and stable coating layer with a high silicon content on the surface of the transition metal oxide, which can effectively alleviate the corrosion of HF in the electrolytic solution on the surface of the transition metal oxide and reduce the side reactions of the transition metal and the lattice oxygen deintercalation, thereby stabilizing the surface of the transition metal oxide and achieving the purpose of improving the cycle performance and DCR of the battery at a high voltage. In some other embodiments of the present application, the mass ratio of the total mass of the siloxane-containing backbone material and the siloxane-containing crosslink material to the transition metal oxide is 1:100 to 1:200.

In some embodiments of the present application, the mass ratio of the siloxane-containing backbone material to the siloxane-containing crosslink material is 1:1 to 50:1, for example, 5:1 to 45:1, 10:1 to 40:1, 15:1 to 35:1, 20:1 to 30:1, 25:1 to 30:1, or the like. Therefore, mixing the backbone material and the crosslink material in the present application in the ratio can form a better coating layer on the surface of the transition metal oxide, and the high silicon content in the coating layer effectively alleviates the corrosion of HF in the electrolytic solution on the surface of the transition metal oxide and reduces the side reactions of the transition metal and the lattice oxygen deintercalation, thereby stabilizing the surface of the transition metal oxide and achieving the purpose of improving the cycle performance and DCR of the battery at a high voltage. In some embodiments of the present application, the mass ratio of the siloxane-containing backbone material to the siloxane-containing crosslink material is 10:1 to 30:1.

In some embodiments of the present application, the composition of the transition metal oxide is described above and will not be recited here.

In a third aspect of the present application, the present application provides a positive electrode plate. The positive electrode plate includes the positive electrode active material according to the first aspect of the present application or a positive electrode active material obtained from the method according to the second aspect of the present application.

In some embodiments of the present application, the positive electrode plate includes a positive electrode current collector and a positive electrode active active substance layer, the positive electrode active substance layer is disposed on at least one side of the positive electrode current collector, and the positive electrode active material layer includes the positive electrode active material.

As an example, the positive electrode current collector has two surfaces opposite to each other in its own thickness direction, and the positive electrode active substance layer is disposed on any one or both of the two opposite surfaces of the positive electrode current collector.

In some embodiments of the present application, a metal foil or a composite current collector may be used as the positive electrode current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, and the like) on the polymer material substrate (such as a substrate made of polypropylene (PP), polyethylene terephthalate (PET), polybutylene terephthalate (PBT), polystyrene (PS), and polyethylene (PE)).

In some embodiments of the present application, the positive electrode active substance layer may further include a positive electrode active material, and a positive electrode active material for use in batteries known in the art may be used as the positive electrode active material.

In some embodiments of the present application, the positive electrode active substance layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorinated acrylic resin.

In some embodiments of the present application, on the basis of the total mass of the active substance layer, the mass proportion of the binder is 0.5% to 3%, for example, 0.5%, 1%, 1.5%, 2%, 2.5%, 3%, or the like.

In some embodiments of the present application, the positive electrode active substance layer further optionally includes a conductive agent. As an example, the conductive agent may include at least one of superconducting carbon, acetylene black, carbon black, Ketjen black, a carbon dot, a carbon nanotube, graphene, or a carbon nanofiber.

In some embodiments of the present application, on the basis of the total mass of the active substance layer, the mass proportion of the conductive agent is 0.8% to 4%, for example, 0.8%, 1%, 1.5%, 2%, 2.5%, 3%, 3.5%, 4%, or the like.

In some embodiments of the present application, the positive electrode plate can be prepared in the following manner: dispersing the components described above for preparing the positive electrode plate, such as the positive electrode active material, the siloxane-containing backbone material, the siloxane-containing crosslink material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, so as to give the positive electrode plate.

In some embodiments of the present application, the positive electrode plate can also be prepared in the following manner: mixing the siloxane-containing backbone material and the siloxane-containing crosslink material with the transition metal oxide; adding the conductive agent and/or the binder to give a mixed slurry; applying the mixed slurry to at least one side of the positive electrode current collector; and performing drying, cold pressing, and other procedures, so as to give the positive electrode plate.

A fourth aspect of the present application provides a battery. The battery includes the positive electrode plate according to the third aspect of the present application. Therefore, the battery of the present application has better cycle performance and relatively low DCR at a high voltage.

In some embodiments of the present application, the battery further includes a negative electrode plate. The negative electrode plate includes a negative electrode current collector and a negative electrode active substance layer disposed on at least one surface of the negative electrode current collector, and the negative electrode active substance layer includes a negative electrode active material.

As an example, the negative electrode current collector has two surfaces opposite to each other in its own thickness direction, and the negative electrode active substance layer is disposed on any one or both of the two opposite surfaces of the negative electrode current collector.

In some embodiments of the present application, a metal foil or a composite current collector may be used as the negative electrode current collector. For example, as the metal foil, a copper foil may be used. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, and the like) on the polymer material substrate (such as a substrate made of polypropylene (PP), polyethylene terephthalate (PET), polybutylene terephthalate (PBT), polystyrene (PS), and polyethylene (PE)).

In some embodiments of the present application, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may include at least one of elemental silicon, a silicon-oxygen compound, a silicon-carbon composite, a silicon-nitrogen composite, or a silicon alloy. The tin-based material may include at least one of elemental tin, a tin-oxygen compound, or a tin alloy. However, the present application is not limited to these materials, and other conventional materials that can be used as negative electrode active materials for batteries may also be used. These negative electrode active materials may be used alone or in a combination of two or more.

In some embodiments of the present application, the negative electrode active substance layer further optionally includes a binder. The binder may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments of the present application, the negative electrode active substance layer further optionally includes a conductive agent. The conductive agent may include at least one of superconducting carbon, acetylene black, carbon black, Ketjen black, a carbon dot, a carbon nanotube, graphene, or a carbon nanofiber.

In some embodiments of the present application, the negative electrode active substance layer further optionally includes other auxiliary agents, for example, a thickener (e.g., sodium carboxymethylcellulose (CMC-Na)).

In some embodiments of the present application, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

Typically, a battery includes a positive electrode plate, a negative electrode plate, an electrolyte, and a separator. During the charging and discharging process of the battery, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to primarily prevent the positive and negative electrodes from short-circuiting while allowing the passage of ions.

The type of the electrolyte is not specified in the present application, and can be determined as desired. For example, the electrolyte may be liquid, gel, or all solid.

In some embodiments of the present application, the electrolyte is an electrolytic solution. The electrolytic solution includes an electrolyte salt and a solvent.

In some embodiments of the present application, when the battery is a lithium-ion battery, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, or lithium tetrafluoro(oxalato)phosphate.

In some embodiments of the present application, when the battery is a sodium-ion battery, the electrolyte salt may include at least one of sodium hexafluorophosphate, sodium difluoro(oxalato)borate, sodium tetrafluoroborate, sodium bis(oxalato)borate, sodium perchlorate, sodium hexafluoroarsenate, sodium bis(fluorosulfonyl)imide, sodium trifluoromethanesulfonate, or sodium bis(trifluoromethylsulfonyl)imide.

In some embodiments of the present application, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, dimethoxyethane, ethyl methyl sulfone, or diethyl sulfone.

In some embodiments of the present application, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high-or low-temperature performance of the battery.

The present application does not particularly limit the type of the separator, and any porous-structure separator known to have good chemical stability and mechanical stability may be selected.

In some embodiments, the separator may be made of a material including at least one of glass fiber, non-woven fabric, polyethylene, polypropylene, or polyvinylidene fluoride. The separator may be a single-layer film or a multi-layer composite film, which is not specified. When the separator is a multi-layer composite film, the materials of the layers may be the same or different, which is not specified.

In some embodiments, the positive electrode plate, the negative electrode plate, and the separator may be manufactured into an electrode assembly through a winding process or a stacking process.

In some embodiments, the secondary battery may include an outer packaging. The outer packaging may be used for packaging the electrode assembly and the electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

The shape of the battery is not specified in the present application, which may be cylindrical, prismatic, or any other shape. For example, FIG. 2 shows a battery cell 1 having a prismatic structure as one example.

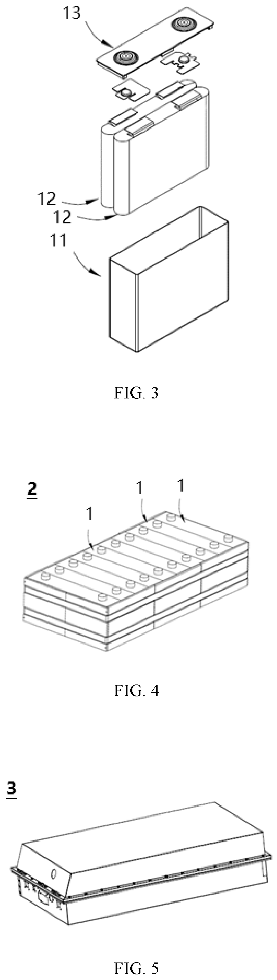

In some embodiments, referring to FIG. 3, the outer packaging may include a housing 11 and a cover plate 13. The housing 11 may include a bottom plate and side plates connected to the bottom plate, and the bottom plate and the side plates define, in an enclosing manner, an accommodating cavity. The housing 11 is provided with an opening in communication with the accommodating cavity, and the cover plate 13 is capable of lidding the opening to close the accommodating cavity. The positive electrode plate, the negative electrode plate, and the separator may be subjected to a winding process or a stacking process to form an electrode assembly 12. The electrode assembly 12 is packaged in the accommodating cavity. The electrolytic solution is infiltrated into the electrode assembly 12. The number of the electrode assembly 12 included in the battery cell 1 may be one or more, and those skilled in the art can select the number according to specific and actual requirements.

In some embodiments, the battery may be assembled into a battery module. The number of batteries included in the battery module may be one or more, and the specific number may be selected by those skilled in the art based on the use and capacity of the battery module.

FIG. 4 shows a battery module 2 as one example. Referring to FIG. 4, in the battery module 2, a plurality of battery cells 1 may be sequentially disposed in a length direction of the battery module 2. Certainly, the arrangement may also be in any other manner. Further, the plurality of battery cells 1 may be fixed by fasteners.

Optionally, the battery module 2 may further include a shell having an accommodating space in which the plurality of battery cells 1 are accommodated.

In some embodiments, the battery module described above may also be assembled into a battery pack. The number of battery modules included in the battery pack may be one or more, and the specific number may be selected by those skilled in the art based on the use and capacity of the battery pack.

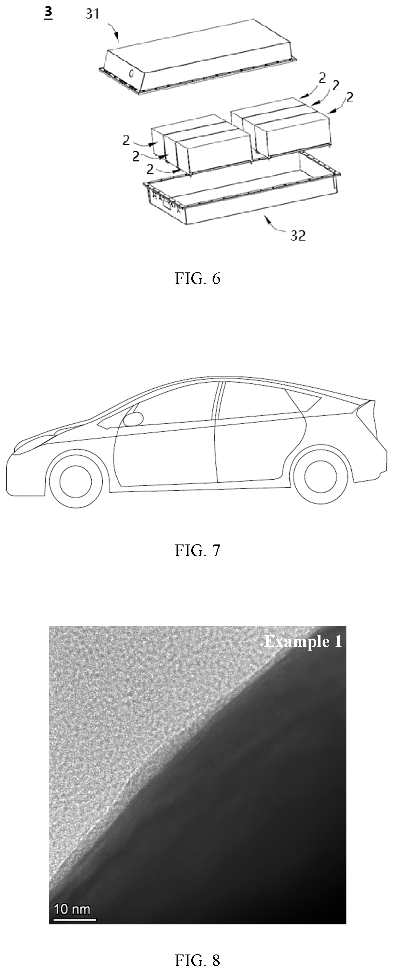

FIGs. 5 and 6 show a battery pack 3 as one example. Referring to FIGs. 5 and 6, the battery pack 3 may include a battery case and a plurality of battery modules 2 disposed in the battery case. The battery case includes an upper case body 31 and a lower case body 32. The upper case body 31 is capable of lidding the lower case body 32 to form a closed space for accommodating the battery modules 2. The plurality of battery modules 2 may be arranged in any manner in the battery case.

In addition, the present application further provides an electric device. The electric device includes at least one of the secondary battery, the battery module, or the battery pack provided in the present application. The secondary battery, the battery module, or the battery pack may be used as a power source for the electric device, and they may also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like.

As the electric device, a secondary battery, a battery module, or a battery pack may be selected based on its use requirements.

FIG. 7 shows an electric device as one example. The electric device is a pure electric vehicle, a hybrid electric vehicle, a plug-in hybrid electric vehicle, or the like. To meet the requirements of the electric device for high power and high energy density of the secondary battery, a battery pack or a battery module may be used.

As another example, the device may be a mobile phone, a tablet computer, a laptop computer, or the like. The device is generally required to be light and thin, and a battery can thus be used as a power source.

Hereinafter, examples of the present application are described. The examples described below are illustrative and merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

### Example 1

### 1. Preparation of positive electrode plate

The transition metal oxide Li(Ni_{0.56}Co_{0.05}Mn_{0.39})O₂, the backbone material (the compound of formula 1), the crosslink material (the compound of formula 11), and the organic solvent NMP (N-methylpyrrolidone) were mixed thoroughly, with the mass ratio of the total mass of the backbone material and the crosslink material to the transition metal oxide being 1:150 and the mass ratio of the backbone material to the crosslink material being 12:1. Then, the conductive agent carbon black (Super P) and the binder polyvinylidene fluoride (PVDF) (the mass ratio of the total mass of the transition metal oxide, the backbone material, and the crosslink material to the conductive agent to the binder was 97:2:1) were added. The mixture was further stirred and mixed to give a stable positive electrode slurry.

The positive electrode slurry was applied to the two surfaces of the positive electrode current collector aluminum foil, and the aluminum foil was subjected to drying and cold pressing to form the positive electrode active substance layer on the two surfaces of the positive electrode current collector. Through slitting and cutting procedures, a positive electrode plate was obtained.

### 2. Preparation of negative electrode plate

The negative electrode active material artificial graphite, the conductive agent carbon black (Super P), the binder styrene-butadiene rubber (SBR), and sodium carboxymethylcellulose (CMC-Na), in a mass ratio of 96:1:1.5:1.5, were mixed thoroughly in an appropriate amount of a deionized water solvent to give a negative electrode slurry. The negative electrode slurry was applied to the two surfaces of the negative electrode current collector copper foil, and the copper foil was subjected to drying and cold pressing to form the negative electrode active substance layer on the two surfaces of the negative electrode current collector. Finally, through slitting and cutting procedures, a negative electrode plate was obtained.

### 3. Preparation of electrolytic solution

In a glove box in an argon atmosphere (H₂O < 0.1 ppm, O₂ < 0.1 ppm), ethylene carbonate and ethyl methyl carbonate were mixed in a mass ratio of 30:70 to give a solvent. A thoroughly dried electrolyte salt LiPF₆ was dissolved in the above solvent, and the mixture was mixed thoroughly to give an electrolytic solution with a concentration of 1 mol/L.

### 4. Separator

A polypropylene film was used as the separator.

### 5. Preparation of secondary battery

The positive electrode plate, the separator, and the negative electrode plate were stacked in sequence to enable the separator to be disposed between the positive electrode plate and the negative electrode plate for isolation, and then the stack was wound to obtain an electrode assembly. The electrode assembly was placed in an outer packaging, and the above prepared electrolytic solution was injected into the dried lithium-ion battery, followed by procedures including vacuum packaging, standing, formation, and shaping, and the lithium-ion battery was obtained.

The preparation methods for the lithium-ion batteries in Examples 2 to 13 and Comparative Examples 1 to 3 were the same as that in Example 1, except that the process of preparing the positive electrode plate was different, as detailed in Table 1.

The preparation method for the lithium-ion battery in Example 14 was the same as that in Example 1, except that in the method for preparing the positive electrode plate, the transition metal oxide Li(Ni_{0.56}Co_{0.05}Mn_{0.39})O₂, the conductive agent carbon black (Super P), and the binder polyvinylidene fluoride (PVDF) were thoroughly mixed by stirring before the backbone material (the compound of formula 1) and the crosslink material (the compound of formula 11) were added, and the mixture was then stirred to form the positive electrode slurry.

**Table 1**

| | Positive electrode active material | | | | |
|---|---|---|---|---|---|
| | Core | Coating layer | | Mass ratio of total mass of backbone material and crosslink material to transition metal oxide | Mass ratio of backbone material to crosslink material |
| | Composition of transition metal oxide | Composition of backbone material | Composition of crosslink material | | |
| Example 1 | Li(Ni_{0.56}Co_{0.05}Mn_{0.39})O₂ | Formula 1 | Formula 11 | 1:150 | 12:1 |
| Example 2 | Li(Ni_{0.56}Co_{0.05}Mn_{0.39})O₂ | Formula 1 | Formula 11 | 1:300 | 12:1 |
| Example 3 | Li(Ni_{0.56}Co_{0.05}Mn_{0.39})O₂ | Formula 1 | Formula 11 | 1:100 | 12:1 |
| Example 4 | Li(Ni_{0.56}Co_{0.05}Mn_{0.39})O₂ | Formula 1 | Formula 11 | 1:200 | 12:1 |
| Example 5 | Li(Ni_{0.56}Co_{0.05}Mn_{0.39})O₂ | Formula 1 | Formula 11 | 1:75 | 12:1 |
| Example 6 | Li(Ni_{0.56}Co_{0.05}Mn_{0.39})O₂ | Formula 1 | Formula 11 | 1:150 | 10:1 |
| Example 7 | Li(Ni_{0.56}Co_{0.05}Mn_{0.39})O₂ | Formula 1 | Formula 11 | 1:150 | 20:1 |
| Example 8 | Li(Ni_{0.56}Co_{0.05}Mn_{0.39})O₂ | Formula 1 | Formula 11 | 1:150 | 30:1 |
| Example 9 | Li(Ni_{0.56}Co_{0.05}Mn_{0.39})O₂ | Formula 1 | Formula 11 | 1:150 | 50:1 |
| Example 10 | LiCoO₂ | Formula 1 | Formula 11 | 1:150 | 12:1 |
| Example 11 | Li(Ni_{0.56}Co_{0.05}Mn_{0.39})O₂ | Formula 4 | Formula 11 | 1:150 | 12:1 |
| Example 12 | Li(Ni_{0.56}Co_{0.05}Mn_{0.39})O₂ | Formula 1 | Formula 5 | 1:150 | 12:1 |
| Example 13 | Li(Ni_{0.56}Co_{0.05}Mn_{0.39})O₂ | Formula 1 | Formula 1 | 1:150 | 12:1 |
| Example 14 | Li(Ni_{0.56}Co_{0.05}Mn_{0.39})O₂ | Formula 1 | Formula 11 | 1:150 | 12:1 |
| Comparative Example 1 | Li(Ni_{0.56}Co_{0.05}Mn_{0.39})O₂ | / | / | / | / |
| Comparative Example 2 | Li(Ni_{0.56}Co_{0.05}Mn_{0.39})O₂ | Formula 11 | Formula 11 | 1:150 | 12:1 |
| Comparative Example 3 | Li(Ni_{0.56}Co_{0.05}Mn_{0.39})O₂ | Formula 1 | Formula 11 | 1:150 | 70:1 |

The silicon content and the thickness of the coating layer of the positive electrode active material obtained in Examples 1 to 14 and Comparative Examples 1 to 3, as well as the cycle performance and direct current resistance (DCR) of the battery, were characterized. The characterization results are shown in Table 2.

### (1) Assay of silicon content in coating layer of positive electrode active material:

The quantitative analysis of elements was performed by using an inductively coupled plasma optical emission spectrometer (ICP). The powder on the positive electrode plate was scraped off and digested (mixing the powder with alcohol and dispersing for 20 min through ultrasonic waves) to prepare a test sample, and then the silicon content was tested by using an ICP-MS mode.

### (2) Thickness test of coating layer of positive electrode active material:

The powder on the positive electrode plate was scraped off and digested (mixing the powder with alcohol and dispersing for 20 min through ultrasonic waves) to prepare a test sample, and the thickness of the coating layer of the positive electrode active material was observed by using a transmission electron microscope (TEM).

### (3) Cycle performance test of battery:

The ambient temperature was controlled at 25 °C, the battery was left to stand for 1 h, discharged to 2.5 V at 0.33 C, left to stand for 5 min, charged to 4.4 V at 0.33 C, left to stand for 5 min, and discharged to 2.5 V at 0.33 C, and the discharging capacity was recorded as C₀. The cycle temperature was adjusted to 45 °C, and 700 cycles of the following process were performed: charging to 4.4 V at 0.5 C, standing for 5 min, discharging to 2.5 V at 1 C, and standing for 5 min. The discharging capacity of the 700th cycle was C₁, and the cycle capacity retention rate of the cell = C₁/C₀ × 100%.

### (4) Battery DCR test

At 25 °C, the battery was charged to 4.4 V at 0.33 C, then charged to 0.05 C at a constant voltage, left to stand for 5 min, then discharged at 0.33 C for 1.5 h, and left to stand for 120 min. The voltage V₁ after being left to stand was recorded. The battery was then discharged at 4 C for 30 s, and the sampling point interval was 0.1 s. The voltage V₂ at the end of discharging was recorded, and the battery DCR (direct-current internal resistance) = (V₁ - V₂)/I, where I = 4 C.

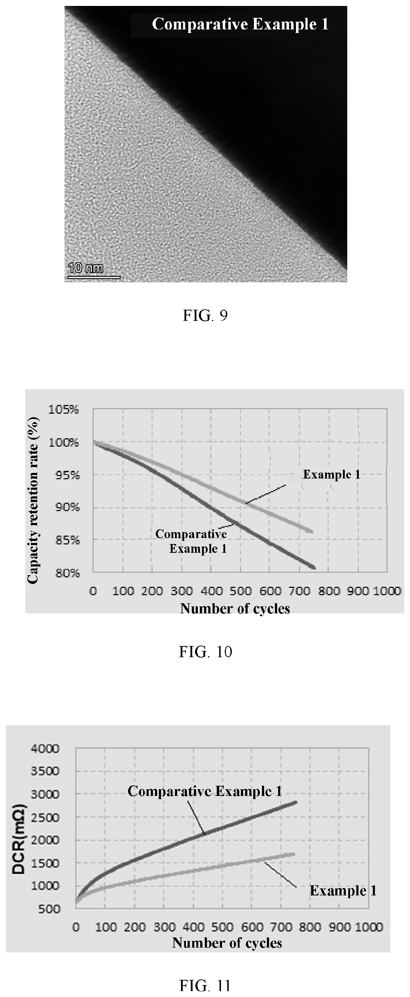

FIG. 8 is a TEM image of the positive electrode active material obtained in Example 1, and FIG. 9 is a TEM image of the positive electrode active material obtained in Comparative Example 1. As can be seen from FIGs. 8 and 9, the surface of the positive electrode active material obtained in Example 1 had an obvious coating layer, while the surface of the positive electrode active material obtained in Comparative Example 1 had no coating layer. FIG. 10 is a comparison diagram of cycle curves of batteries obtained in Example 1 and Comparative Example 1, and it can be seen from FIG. 10 that the capacity retention rate of the lithium-ion battery obtained in Example 1 was significantly higher than that of Comparative Example 1 after 700 cycles. FIG. 11 is a comparison diagram of the DCR of batteries obtained in Example 1 and Comparative Example 1 after cycling, and it can be seen from FIG. 11 that the DCR of the lithium-ion battery obtained in Example 1 was significantly lower than that of Comparative Example 1 after 700 cycles.

**Table 2**

| | Positive electrode active material | | Battery performance | |
|---|---|---|---|---|
| | Thickness of coating layer (nm) | Mass proportion of silicon in coating layer on the basis of total mass of positive electrode active material (%) | Capacity retention rate (%) | DCR after cycling (mΩ) |
| Example 1 | 2.5 | 0.30 | 87.9 | 1710 |
| Example 2 | 1.5 | 0.09 | 85.7 | 1950 |
| Example 3 | 3.0 | 0.29 | 87.3 | 1720 |
| Example 4 | 2.1 | 0.25 | 87.4 | 1785 |
| Example 5 | 5.0 | 0.60 | 86.7 | 2231 |
| Example 6 | 2.3 | 0.28 | 87.6 | 1757 |
| Example 7 | 2.8 | 0.29 | 87.6 | 1751 |
| Example 8 | 3.0 | 0.30 | 87.5 | 1756 |
| Example 9 | 4.0 | 0.48 | 87.3 | 2195 |
| Example 10 | 2.3 | 0.28 | 88.3 | 1760 |
| Example 11 | 2.0 | 0.24 | 87.1 | 1786 |
| Example 12 | 2.1 | 0.29 | 88.5 | 1702 |
| Example 13 | 0.7 | 0.08 | 83.2 | 2410 |
| Example 14 | 0.5 | 0.06 | 82.6 | 2630 |
| Comparative Example 1 | / | / | 81.2 | 2729 |
| Comparative Example 2 | 0.3 | 0.03 | 81.9 | 2690 |
| Comparative Example 3 | 8.1 | 1.30 | 86.8 | 2679 |

As can be seen from the data in Table 2, the silicon content in the coating layer of the positive electrode active material obtained in Examples 1 to 14 was 0.05% to 1%, while the positive electrode active material in the battery of Comparative Example 1 did not have a coating layer, and the silicon content in the coating layer of the positive electrode active material in Comparative Example 2 was 0.03%. The capacity retention rate of the batteries of Examples 1 to 14 was significantly higher than that of Comparative Examples 1 to 2, and the DCR of the batteries of Examples 1 to 14 was significantly lower than that of Comparative Examples 1 to 2. The silicon content in the coating layer of the positive electrode active material obtained in Comparative Example 3 was 1.3%. Although its battery had relatively high cycle performance, the coating layer of the positive electrode active material was too thick, which affected the transmission of lithium ions, resulting in a relatively low DCR after cycling. Therefore, according to the present application, controlling the silicon content in the coating layer of the surface of the positive electrode active material at 0.05% to 1% can significantly improve the stability of the positive electrode active material, thereby improving the cycle performance and direct current resistance of the battery at a high voltage.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A positive electrode active material, comprising:
a core, comprising a transition metal oxide; and
a coating layer formed on the surface of the core, wherein the coating layer comprises a polymer containing a silicon-oxygen bond, and on the basis of the total mass of the positive electrode active material, the mass proportion of silicon in the polymer is 0.05% to 1%.

2. The positive electrode active material according to claim 1, wherein on the basis of the total mass of the positive electrode active material, the mass proportion of silicon in the polymer is 0.1% to 0.3%.

3. The positive electrode active material according to claim 1 or 2, wherein the thickness of the coating layer is 1 nm to 5 nm.

4. The positive electrode active material according to any one of claims 1 to 3, wherein the thickness of the coating layer is 2 nm to 3 nm.

5. The positive electrode active material according to any one of claims 1 to 4, wherein the transition metal oxide comprises at least one of LiₓMO_{y} and NaₓMO_{y}, wherein x is 1 to 2, y is 2 to 3, and M comprises at least one of Ni, Co, Mn, Fe, Al, W, Nb, Ti, Zr, Sr, or V.

6. A method for preparing a positive electrode active material, comprising: mixing a transition metal oxide with a siloxane-containing backbone material and a siloxane-containing crosslink material to form a coating layer comprising a polymer containing a silicon-oxygen bond on the surface of the transition metal oxide, wherein the siloxane-containing backbone material comprises at least 2 silicon atoms and at least 3 siloxane groups,
the siloxane-containing crosslink material comprises 1 to 3 siloxane groups, and
on the basis of the total mass of the positive electrode active material, the mass proportion of silicon in the polymer is 0.05% to 1%.

7. The method according to claim 6, wherein the molecular weight of the siloxane-containing backbone material is 300 to 10,000.

8. The method according to claim 6 or 7, wherein the molecular weight of the siloxane-containing backbone material is 500 to 1200.

9. The method according to any one of claims 6 to 8, wherein the structural formula of the siloxane-containing backbone material comprises: 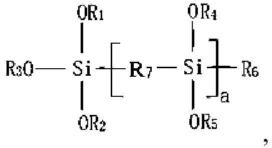 wherein a is 1 to 6, R₁, R₂, R₃, R₄, and R₅ each independently comprise alkyl, R₆ comprises alkyl, alkoxy, a boron-containing group, a phosphorus-containing group, a halogen-containing group, a selenium-containing group, cyano, hydroxyl, -N₃, nitroso, amino, an ester group, acylamino, an aldehyde group, acyl, alkylthio, or alkylamine, and R₇ comprises alkyl, alkenyl, alkoxy, phenyl, 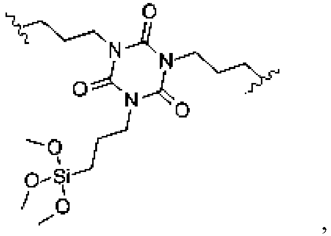 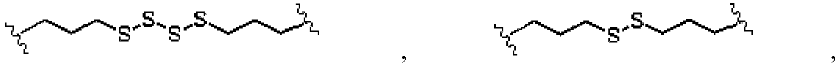 or

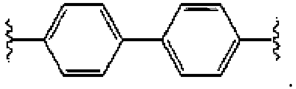

10. The method according to claim 9, wherein R₁, R₂, R₃, R₄, and R₅ each independently comprise ethyl or methyl, R₆ comprises methoxy or ethoxy, and R₇ comprises

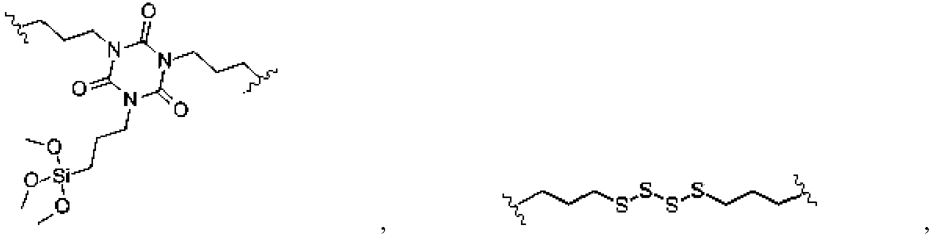

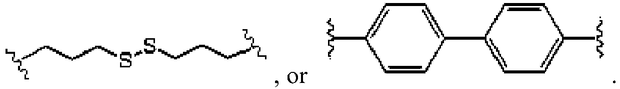

11. The method according to any one of claims 6 to 10, wherein the siloxane-containing backbone material comprises at least one of 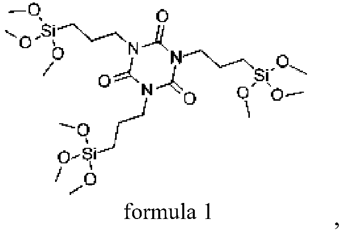 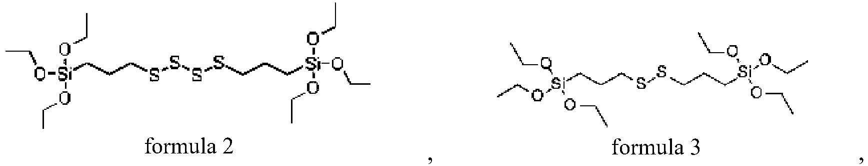 or

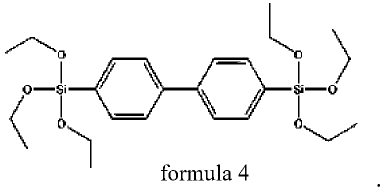

12. The method according to any one of claims 6 to 11, wherein the siloxane-containing backbone material comprises at least one of

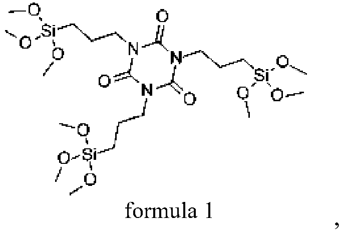

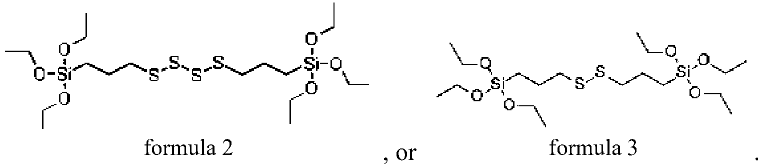

13. The method according to any one of claims 6 to 12, wherein the molecular weight of the siloxane-containing crosslink material is 90 to 500.

14. The method according to any one of claims 6 to 13, wherein the molecular weight of the siloxane-containing crosslink material is 100 to 300.

15. The method according to any one of claims 6 to 14, wherein the structural formula of the siloxane-containing crosslink material comprises: 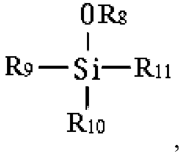 wherein R₈ comprises alkyl, R₉ and R₁₀ each independently comprise hydrogen, alkyl, alkoxy, phenyl, or haloalkyl, and R₁₁ comprises alkyl, 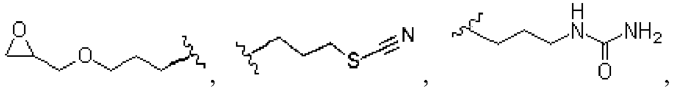 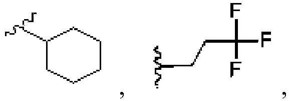 a boron-containing group, a phosphorus-containing group, a halogen-containing group, a selenium-containing group, cyano, hydroxyl, -N₃, nitroso, amino, an ester group, acylamino, an aldehyde group, acyl, alkylthio, or alkylamine.

16. The method according to claim 15, wherein R₈ and R₉ each independently comprise methyl, ethyl, methoxy, or ethoxy, R₁₀ comprises methyl, methoxy, or ethoxy, and R₁₁ comprises methyl,

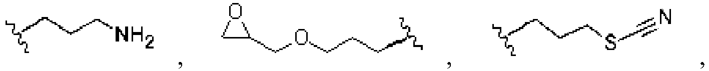

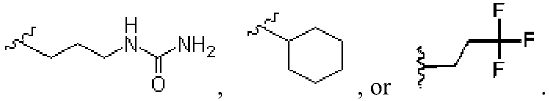

17. The method according to any one of claims 6 to 16, wherein the siloxane-containing crosslink material comprises at least one of

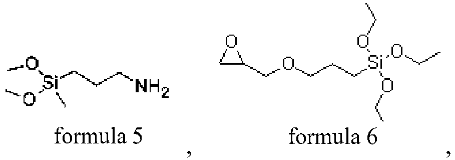

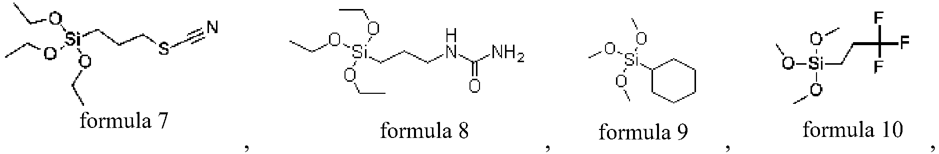

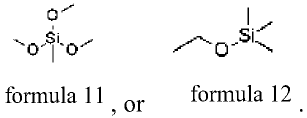

18. The method according to any one of claims 6 to 17, wherein the siloxane-containing crosslink material comprises at least one of 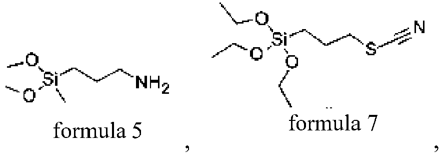 or

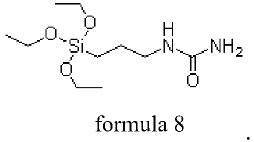

19. The method according to any one of claims 6 to 18, wherein the mass ratio of the total mass of the siloxane-containing backbone material and the siloxane-containing crosslink material to the transition metal oxide is 1:50 to 1:1000.

20. The method according to any one of claims 6 to 19, wherein the mass ratio of the total mass of the siloxane-containing backbone material and the siloxane-containing crosslink material to the transition metal oxide is 1:100 to 1:200.

21. The method according to any one of claims 6 to 20, wherein the mass ratio of the siloxane-containing backbone material to the siloxane-containing crosslink material is 1:1 to 50:1.

22. The method according to any one of claims 6 to 21, wherein the mass ratio of the siloxane-containing backbone material to the siloxane-containing crosslink material is 10:1 to 30:1.

23. A positive electrode plate, comprising the positive electrode active material according to any one of claims 1 to 5 or a positive electrode active material obtained from the method according to any one of claims 6 to 22.

24. A battery, comprising the positive electrode plate according to claim 23.

25. An electric device, comprising the battery according to claim 24.
